## Europäisches Patentamt
## European Patent Office
## Office européen des brevets

(19)

(11) Numéro de publication: **0 010 010**
**B1**

(12) **FASCICULE DE BREVET EUROPEEN**

(45) Date de publication du fascicule du brevet: **02.03.83**

(51) Int. Cl.³: **H 04 N 1/40**

(21) Numéro de dépôt: **79400592.6**

(22) Date de dépôt: **28.08.79**

(54) **Dispositif à seuil permettant de distinguer le blanc du noir sur un document et émetteur de télécopie comportant un tel dispositif.**

(30) Priorité: **08.09.78 FR 7825850**

(43) Date de publication de la demande:
**16.04.80 Bulletin 80/8**

(45) Mention de la délivrance du brevet:
**02.03.83 Bulletin 83/9**

(84) Etats contractants désignés:
**DE GB NL**

(56) Documents cités:
**FR - A - 2 223 701**
**GB - A - 1 219 334**
**US - A - 3 267 293**
**US - A - 4 078 227**

(73) Titulaire: **THOMSON-CSF**
**173, Boulevard Haussmann**
**F-75379 Paris Cedex 08 (FR)**

(72) Inventeur: **Butin, Henri**
**"THOMSON-CSF" - SCPI 173, bld Haussmann**
**F-75360 Paris Cedex 08 (FR)**

(74) Mandataire: **Guilguet, Philippe et al,**
**THOMSON-CSF SCPI 173, Bld Haussmann**
**F-75379 Paris Cedex 08 (FR)**

Courier Press, Leamington Spa, England.

Dispositif à seuil permettant de distinguer la blanc du noir sur un document et
émetteur de télécopie comportant un tel dispositif

La présente invention concerne les dispositifs à seuil permettant de distinguer le niveau de blanc de niveau de noir à partir des signaux fournis par une tête de lecture analysant on document.

Un exemple de réalisation connu de tels dispositifs est décrit dans le brevet des Etats-Unis 4 078 227. Ce dispositif comprend un amplificateur recevant un premier signal d'une tête de lecture d'un document et délivrant un deuxième signal à destination d'une première entrée d'un comparateur. La sortie du comparateur délivre un signal présentant un premier niveau lorsque le niveau du premier signal est un niveau de blanc et un second niveau lorsque le niveau du premier signal est un niveau de noir. Le dispositif comprend également un interrupteur électronique pour appliquer le deuxième signal sortant de l'amplificateur, d'une part, à la première entrée du comparateur de d'autre part, aux bornes d'un condensateur de mémorisation dont une extrémité est reliée à la masse du dispositif et dont l'autre extrémité est reliée à la deuxième entrée du comparateur au travers d'un diviseur potentiométrique ainsi qu'à la sortie de l'amplificateur au travers d'une diode d'isolement. Un basculeur est couplé à la sortie du comparatuer, pour mémoriser, l'état du signal de sortie du comparateur, suivant que le signal correspondant fourni par la tête de lecture correspond à un niveau de blanc ou de noir. Dans ce dispositif la tension délivrée par le diviseur potentiométrique est proportionnelle à la tension mémorisée aux bornes du condensateur de mémorisation et sert de tension de référence au comparateur qui délivre une tension d'un premier état lorsque la tension du deuxième signal est supérieure au seuil de tension de référence et un signal d'un deuxième état lorsque la tension du deuxième signal est inférieure au seuil de tension de référence.

Avec la présence de la diode d'isolement la recharge du condensateur de mémorisation n'est possible que lorsque la tension échantillonnée par l'interrupteur électronique à la sortie de l'amplificateur est supérieure à la tension du signal déjà mémorisée dans le condensateur de mémorisation si bien que des variation successives de niveau du deuxième signal délivré par l'amplificateur comprise entre la valeur de seuil délivrée par le diviseur potentiométrique et la valeur de la tension aux bornes du condensateur ne seront pas prise en compte par le dispositif pour remettre à jour la valeur du signal mémorisé dans le condensateur. Il en résulte que le niveau de référence de noir ou de blanc dans ce dispositif n'est pas ajusté automatiquement lorsque le niveau de blanc ou de noir varie en fonction de l'éclairement et de la teinte de fond du document.

La présente invention a pour but de remédier à cet inconvénient à l'aide d'un dispositif qui permette de modifier la valeur de la tension mise en mémoire dans le condensateur de mémorisation à chaque point blanc lu, de façon à pouvoir ajuster la valeur du seuil de comparaison du comparateur en fonction des variations d'éclairement et de la teinte de fond du document.

La présente invention a donc pour objet un dispositif à seuil permettant de distinguer le niveau du blanc du niveau du noir dans un premier signal fourni par une tête de lecture analysant un document, du type comportant un moyen d'amplification, recevant le premier signal et délivrant un deuxième signal, couplés à la première entrée d'un comparateur dont la sortie délivre un signal présentant un premier niveau lorsque le niveau du premier signal est un niveau du blanc et un second niveau lorsque le niveau du premier signal est un niveau du noir, un premier interrupteur électronique pour appliquer le deuxième signal, sortant des moyens d'amplification, à la première entrée du comparateur, un condensateur de mémorisation du niveau de tension du deuxième signal, un diviseur potentiométrique de la tension mémorisée aux bornes du condensateur de mémorisation couplé à la deuxième entrée du comparateur pour appliquer sur la deuxième entrée du comparateur un tension proportionelle à la tension mémorisée aux bornes du condensateur, et un basculeur de mémorisation du niveau du signal de sortie du comparateur présentant un premier état lorsque la tension de sortie du comparateur correspond à la détection d'un niveau de blanc et un deuxième état lorsque la tension de sortie du comparateur correspond à un niveau de noir, caractérisé en ce qu'il comprend un deuxième interrupteur électronique commandé par la sortie du basculeur de mémorisation et inséré entre le condensateur de mémorisation du niveau de tension du deuxième signal et la sortie des moyens d'amplification délivrant le deuxième signal pour autoriser la mémorisation du niveau de tension du deuxième signal dans le condensateur de mémorisation lorsque le basculeur de mémorisation du niveau du signal de sortie du comparateur est dans le premier état et interdire la mémorisation du niveau de tension du deuxième signal dans le condensateur de mémorisation lorsque le basculeur de mémorisation du niveau du signal de sortie du comparateur est dans le deuxième état.

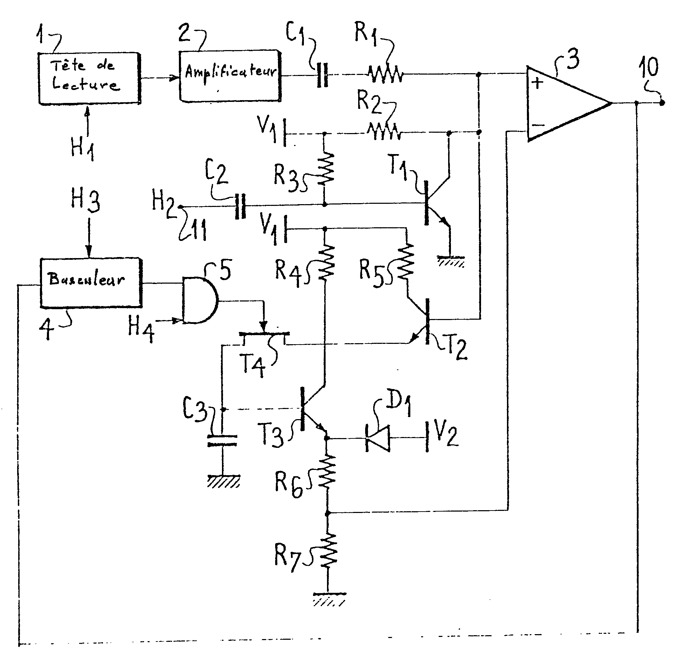

L'invention sera mieux comprise et d'autres caractéristiques apparaîtront à l'aide de la description ci-après et de la figure s'y rapportant qui représente un dispositif à seuil selon l'invention.

Sur cette figure, un amplificateur 2 reçoit sur son entrée les signaux de sortie d'une tête de lecture 1 commandée par un signal d'horloge

$H_1$, et a sa sortie reliée à l'entrée (+) d'un comparateur 3, à travers un condensateur $C_1$ et une résistance $R_1$ disposés en série. L'entrée (+) du comparateur 3 est, en outre, reliée au collecteur d'un transistor NPN, $T_1$, dont l'émetteur est relié à la masse et dont la base est reliée à une borne d'entrée 11 recevant un signal d'horloge $H_2$ à travers un condensateur $C_2$. Une tension $V_1$ positive alimente le collecteur et la base de ce transistor $T_1$ respectivement à travers des résistances $R_2$ et $R_3$. L'entrée (+ du comparateur 3 est également reliée à la base d'un transistor NPN, $T_2$, dont le collecteur rest relié à la tension d'alimentation $V_1$, à travers une résistance $R_5$, et dont l'émetteur est relié à la masse, à travers le canal N d'un transistor à effet de champ $T_4$ et un condensateur $C_3$ disposés en série; le drain du transistor $T_4$ étant relié à l'émetteur du transistor $T_2$. La grille du transistor $T_4$ est alimentée par la sortie d'une porte ET, 5, recevant sur une première entrée un signal d'horloge $H_4$ et sur une seconde entrée le signal de sortie d'une bascule asynchrone 4. Cette bascule 4, commandée par un signal d'horloge $H_3$, reçoit sur son entrée le signal de sortie du comparateur 3 dont la sortie 10 constitue la sortie du dispositif. La tension engendrée aux bornes du condensateur $C_3$ polarise la base d'un transistor NPN, $T_3$, dont le collecteur est relié à la tension $V_1$, à travers une résistance $R_4$, et dont l'émetteur est relié d'une part à la masse, à travers des résistances $R_6$ et $R_7$ disposées en série, et d'autre part à une tension positive $V_2$, à travers une diode $D_1$ polarisée dans le sens direct pour la tension $V_2$. Le point commun aux résistances $R_6$ et $R_7$ est en outre relié à l'entrée (–) du comparateur 3.

Le signal d'horloge $H_1$ est un signal dont l'état "1" a une durée déterminée pour permettre la lecture d'un point d'une ligne.

Le signal d'horloge $H_2$ est complémentaire du signal d'horloge $H_1$, c'est-à-dire que $H_2 = \overline{H_1}$.

Le signal d'horloge $H_3$ est synchrone du signal d'horloge $H_1$ mais les fronts avant de ses impulsions sont retardés d'une durée déterminée par rapport à ceux du signal d'horloge $H_1$, et la largeur de ses impulsions est beaucoup plus faible que celle des impulsions du signal d'horloge $H_1$.

Le signal d'horloge $H_4$ est synchrone du signal d'horloge $H_3$ mais le front avant de ses impulsions est retardé d'une durée déterminée; la largeur de ses impulsions est de même ordre de grandeur que celle des impulsions du signal d'horloge $H_3$ et en outre ce signal d'horloge $H_4$ est à l'état "1" pendant la dernière fraction de l'état "1" du signal d'horloge $H_1$.

Le fonctionnement de ce dispositif est le suivant.

Dans ce dispositif, on engendre une tension de seuil qui représente une fraction de la tension correspondant au niveau du point blanc précédemment lu, la valeur de cette tension mise en mémoire dans un condensateur est modifiée à chaque point blanc lu et est appliquée à une entrée d'un comparateur recevant sur l'autre entrée les signaux correspondant aux points lus.

La tête de lecture 1 convertit la lumière reçue, lors de la lecture de chaque point d'une ligne d'un document, en signaux électriques. Sont fonctionnement est échantillonné par le signal d'horloge $H_1$ dont l'état "1" logique permet la lecture d'un point d'une ligne. L'amplitude du signal électrique fourni par cette tête de lecture 1 est maximale pour un point blanc et minimale pour un point noir. L'amplificateur 2 transmet ces signaux électriques à l'entrée (+) du comparateur 3 à travers le condensateur $C_1$ et la résistance $R_1$, disposés en série, qui associés avec l'impédance d'entrée du comparateur constituent une faible constante de temps n'apportant pas de déformation notable à ces signaux.

Lorsque le signal d'horloge $H_2$ est à l'état "1" (signal d'horloge $H_1$ à l'état "0") une tension positive est appliquée sur la base du transistor $T_1$, cette tension positive sature le transistor $T_1$.

La tension appliquée sur l'entrée (+) du comparateur 3 est alors égale à la valeur de la tension collecteur-émetteur (ou $V_{CE}$) du transistor $T_1$ saturé.

Lorsque le signal d'horloge $H_2$ est à l'état "0" (signal d'horloge $H_1$ à l'état "1") le transistor $T_1$ est bloqué et la tension de l'entrée (+) du comparateur 3 est alors la tension de sortie de la tête de lecture 1, correspondant à un point d'une ligne lu, transmise à travers l'amplificateur 2, le condensateur $C_1$ et la résistance $R_1$. En fait sur l'entrée (+) de ce comparateur 3 les signaux sont alignés sur le potentiel $V_{CE}$ du transistor $T_1$ saturé.

La tension présente sur l'entrée (+) du comparateur 3, lors de l'état "0" du signal d'horloge $H_2$, charge le condensateur $C_3$ à travers le transistor $T_2$, connecté en collecteur commun, et le transistor $T_4$ fonctionnant en interrupteur commandé par le signal de sortie de la porte ET, 5. Cet interrupteur électronique est fermé lorsque le signal de sortie de la porte ET, 5, est à l'état "1". L'intérêt du transistor $T_2$ est de permettre une charge rapide du condensateur $C_3$ compte-tenu de la faible résistance de sortie de ce transistor $T_2$.

Si le premier point d'une ligne lur par la tête de lecture 1 est un point blanc, le signal de sortie sur la borne 10 du comparateur 3 passe à l'état "1" logique car la tension appliquée sur l'entrée (–) de ce dernier est soit une fraction de la tension $V_2$) fraction obtenue par le diviseur potentiométrique constitué des résistances $R_6$ et $R_7$) soit une fraction de la tension en mémoire aux bornes du condensateur $C_3$ (donc une fraction de la tension correspondant à un niveau blanc).

Dans le cas contraire, le signal de sortie sur la borne 10 du comparateur 3 passe à l'état "0".

Les états logiques de sortie de ce comparateur 3 sont mis en mémoire dans la bascule asynchrone 4 commandée par le front avant des impulsions du signal d'horloge $H_3$. L'état de

sortie de cette bascule 4 est appliqué sur la port ET, 5, commandée par le signal d'horloge $H_4$.

Lorsque le point d'une ligne lu par la tête de lecture 1 est blanc, la porte ET, 5, délivre un état "1" logique qui ferme l'interrupteur électronique réalisé par le transistor $T_4$ et permet la charge du condensateur $C_3$.

Lorsque le point est noir, le signal de sortie de la mémoire 4 est à l'état "0" et le condensateur n'est pas chargé par la tension correspondant au point, noir mais garde en mémoire la tension correspondant au point blanc précédent.

L'intérêt de la tension $V_2$ associée à la diode $D_1$ est de fournir une tension de seuil lorsqu'une première ligne d'un document commence par des points noirs.

Il est à noter que la tension de seuil appliquée sur l'entrée (−) du comparateur 3 est une fraction déterminée de la tension correspondant au niveau du point blanc précédemment lu (du fait que le comparateur 3 change d'état avant que la tension correspondant au point lu ne soit enregistrée) ou du dernier point blanc lu dans le cas d'une succession de points noirs. Cette tension de seuil est donc pratiquemment adaptée à chaque point lu.

En outre un fonctionnement correct inclue les relations suivantes:

— Résistance $R_1$ beaucoup plus grande que résistance collecteur-émetteur du transistor $T_1$ saturé
— Résistance $R_1$ beaucoup plus petite que la résistance $R_2$ afin que la quasi-totalité du niveau soit appliquée sur l'entrée (+ du comparateur 3.

L'invention n'est pas limitée au mode de réalisation décrit et représenté, en particulier les transistors $T_1$ à $T_4$ peuvent être des bipolaires PNP ou des transistors à effet de champ.

De tels dispositifs sont notamment utilisables dans les émetteurs de télécopie.

## Revendications

1. Dispositif à seuil permettant de distinguer le niveau du blanc du niveau du noir dans un premier signal fourni par une tête de lecture (1) analysant un document, du type comportant un moyen d'amplification (2), recevant le premier signal et délivrant un deuxième signal, couplé à la première entrée (+) d'un comparateur (3) dont la sortie délivre un signal présentant un premier niveau lorsque le niveau du premier signal est un niveau du blanc et un second niveau lorsque le niveau du premier signal est un niveau du noir, un premier interrupteur électronique ($T_1$) pour appliquer le deuxième signal sortant des moyens d'amplification à la première entrée du comparateur (3), un condensateur de mémorisation ($C_3$) du niveau de tension du deuxième signal, un diviseur potentiométrique ($T_3$, $R_6$, $R_7$) de la tension mémorisée aux bornes du condensateur de mémorisation couplé à la deuxième entrée (−) du comparateur (3) pour appliquer sur cette deuxième entrée une tension proportionnelle à la tension mémorisée aux bornes du condensateur, et un basculeur (4) de mémorisation du niveau du signal de sortie du comparateur (3) présentant un premier état lorsque la tension de sortie du comparateur (3) correspond à la détection d'un niveau de blanc et un deuxième état lorsque la tension de sortie du comparateur correspond à un niveau de noir, caractérisé en ce qu'il comprend un deuxième interrupteur électronique ($T_4$, $T_2$) commandé par la sortie du basculeur de mémorisation (4) et inséré entre le condensateur de mémorisation ($C_3$) du niveau de tension du deuxième signal et la sortie des moyens d'amplification (2) délivrant le deuxième signal pour autoriser la mémorisation de niveau de tension du deuxième signal dans le condensateur de mémorisation ($C_3$) lorsque le basculeur de mémorisation (4) du niveau du signal de sortie du comparateur est dans le premier état et interdire la mémorisation du niveau de tension du deuxième signal dans le condensateur de mémorisation ($C_3$) lorsque le basculeur de mémorisation (4) du niveau du signal de sortie du comparateur est dans le deuxième état.

2. Dispositif à seuil selon la revendication 1, caractérisé en ce que le deuxième interrupteur électronique comprend un transistor à effet de champ ($T_4$ monté en série avec le condensateur de mémorisation ($C_3$) et un transistor bipolaire ($T_2$), monté en collecteur commun, le drain du transistor ($T_4$) étant relié à l'émetteur du transistor ($T_2$) dont la base est reliée à la première entrée (+) du comparateur (3), la source du transistor ($T_4$) étant reliée à une première borne du condensateur de mémorisation ($C_3$) dont la deuxième borne est reliée à la masse du dispositif.

3. Dispositif à seuil selon les revendications 1 et 2, caractérisé en ce que la sortie du basculeur de mémorisation (4) est connectée à la grille de commande du transistor à effet de champ au travers d'une porte ET (5) recevant sur une entrée un signal de synchronisation ($H_4$).

4. Dispositif à seuil selon l'une des revendications 2 ou 3, caractérisé en ce que la première borne du condensateur ($C_3$) est en outre reliée au diviseur potentiométrique constitué par un transistor ($T_3$) dont la base est reliée à cette première borne et dont l'émetteur alimente un atténuateur à résistance ($R_6$, $R_7$) la sortie de l'atténuateur étant reliée à la deuxième entrée (−) du comparateur (3).

5. Dispositif à seuil selon la revendication 4, caractérisé en ce que l'émetteur du transistor ($T_3$) constituant le diviseur potentiométrique est relié à un seuil de tension de référence ($V_2$) au travers d'une diode ($D_1$) polarisée dans le sens directe pour cette tension de référence.

**0010010**

## Patentansprüche

1. Schwellwertvorrichtung zur Unterscheidung des Weißpegels von Schwarzpegel in einem ersten Signal, das von einem ein Dokument analysierenden Kesekopf (1) geliefert wird, mit einer Verstärkereinrichtung (2), die das erste Signal empfängt und ein zweites Signal abgibt, das an den ersten Eingang (+) eines Vergleichers (3) angekoppelt ist, dessen Ausgang ein Signal abgibt, welches einen ersten Pegel aufweist, wenn der Pegel des ersten Signals ein Weißpegel ist, und einen zweiten Pegel aufweist, wenn der Pegel des ersten Signals ein Schwarzpegel ist, mit einem ersten elektronischen Unterbrecher ($T_1$) zum Anlegen des zweiten Signals, das von der Verstärkereinrichtung abgegeben wird, an den ersten Eingang des Vergleichers (3), mit einem Speicherkondensator ($C_3$) zum Speichern des Spannungspegels des zweiten Signals, einem Potentiometer-Spannungsteiler ($T_3$, $R_6$, $R_7$) zum Herabteilen der gespeicherten Spannung an den Anschlüssen des Speicherkondensators, welcher an den zweiten Eingang (—) des Vergleichers (3) angekoppelt ist, um an diesen zweiten Eingang eine Spannung anzulegen, die proportional der gespeicherten Spannung an den Anschlüssen des Kondensators ist, und mit einer Speicher-Kippschaltung (4) zum Speichern des Pegels des Ausgangssignals des Vergleichers (3) mit einem ersten Zustand, wenn die Ausgangsspannung des Vergleichers (3) der Detektion eines Weißpegels entspricht, und einem zweiten Zustand, wenn die Ausgangsspannung des Vergleichers einem Schwarzpegel entspricht, dadurch gekennzeichnet, daß sie einen zweiten elektronischen Unterbrecher ($T_4$, $T_2$) enthält, der durch den Ausgang der Speicher-Kippschaltung (4) gesteuert ist und zwischen den Speicherkondensator ($C_3$) zum Speichern des Spannungspegels des zweiten Signals und den Ausgang der Verstärkereinrichtung (2), die das zweite Signal abgibt, eingefügt ist, um die Speicherung des Spannungspegels des zweiten Signals in dem Speicherkondensator ($C_3$) freizugeben, wenn die Speicher-Kippschaltung (4) zum Speichern des Ausgangspegels des Vergleichers in dem ersten Zustand ist, und die Speicherung des Spannungspegels des zweiten Signals in dem Speicherkondensator ($C_3$) zu sperren, wenn die Speicher-Kippschaltung (4) zum Speichern des Pegels des Ausgangssignals des Vergleichers in dem zweiten Zustand ist.

2. Schwellwertvorrichtung nach Anspruch 1, dadurch gekennzeichnet, daß der zweite elektronische Unterbrecher einen Feldeffekttransistor ($T_4$) umfaßt, der in Reihe mit dem Speicherkondensator ($C_3$) geschaltet ist, und einen in Kollektorschaltung angeordneten bipolaren Transistor ($T_2$) umfaßt, wobei der Drain des Transistors ($T_4$) mit dem Emitter des Transistors ($T_2$) verbunden ist, dessen Basis mit dem ersten Eingang (+) des Vergleichers (3) verbunden ist, während die Source-Elektrode des Transistors ($T_4$) mit einem ersten Anschluß des Speicherkondensators ($C_3$) verbunden ist, dessen zweiter Anschluß mit der Masse der Vorrichtung verbunden ist.

3. Schwellwertvorrichtung nach den Ansprüchen 1 und 2, dadurch gekennzeichnet, daß der Ausgang der Speicher-Kippschaltung (4) mit den Gate des Feldeffekttransistors über eine AND-Schaltung (5) verbunden ist, die an einem Eingang ein Synchronisationssignal ($H_4$) empfängt.

4. Schwellwertvorrichtung nach Anspruch 2 oder 3, dadurch gekennzeichnet, daß der erste Anschluß des Kondensators ($C_3$) ferner mit dem Potentiometer-Spannungsteiler verbunden ist, welcher durch einen Transistor ($T_3$) gebildet ist, dessen Basis mit diesem ersten Anschluß verbunden ist und dessen Emitter ein Widerstandsdämpfungsglied ($R_6$, $R_7$) speist, dessen Ausgang mit dem zweiten Eingang (—) des Vergleichers (3) verbunden ist.

5. Schwellwertvorrichtung nach Anspruch 4, dadurch gekennzeichnet, daß der Emitter des Transistors ($T_3$), welcher den Potentiometer-Spannungsteiler bildet, mit einem Bezugsspannungsschwellwert ($V_2$) über eine Diode ($D_1$) verbunden ist, die für diese Bezugsspannung in Durchlaßrichtung gepolt ist.

## Claims

1. Threshold device permitting to distinguish the white level from the black level of a first signal supplied by a reading head (1) analyzing a document, of the type comprising amplifier means (2) receiving the first signal and feeding a second signal coupled to the first input (+) of a comparator (3) the output of which is a signal having a first level when the level of the first signal is a white level, and a second level when the level of the first signal is a black level, a first electronic interrupter ($T_1$) for applying the second signal fed by the amplifier means to the first input of the comparator (3), a storage capacitor ($C_3$) for storing the voltage level of the second signal, a potentiometer divider ($T_3$, $R_6$, $R_7$) for dividing the stored voltage at the terminals of the storage capacitor coupled to the second input (—) of the comparator (3) for applying a voltage which is proportional to the stored voltage at the terminals of the capacitor to this second input, and a storage bistable (4) for storing the level of the output signal of the comparator (3) and having a first state when the output voltage of the comparator (3) corresponds to the detection of a white level, and a second state when the output voltage of the comparator corresponds to a black level, characterized in that it comprises a second electronic interrupter ($T_4$, $T_2$) controlled by the output of the storage bistable (4) and inserted between the storage capacitor ($C_3$) for storing the voltage level of the second signal and the

5

output of the amplifier means (2) feeding the second signals, to enable storage of the voltage level of the second signal in the storage capacitor ($C_3$) when the storage bistable (4) for storing the output signal level of the comparator is in the first stage, and disabling storage of the voltage level of the second signal in the storage capacitor ($C_3$) when the storage bistable (4) for storing the output signal level of the comparator is in the second state.

2. Threshold device in accordance with claim 1, characterized in that the second electronic interrupter comprises a field effect transistor ($T_4$) mounted in series with the storage capacitor ($C_3$) and a bipolar transistor ($T_2$) mounted in common collector, the drain of the transistor ($T_4$) being connected to the emitter of the transistor ($T_2$) the base of which is connected to the first input (+) of the comparator (3), the source of the transistor ($T_4$) being connected to a first terminal of the storage capacitor ($C_3$) the second terminal of which is connected to the ground of the device.

3. Threshold device in accordance with claims 1 and 2, characterized in that the output of the storage bistable (4) is connected to the gate of the field effect transistor through an AND-gate (5) receiving a synchronizing signal ($H_4$) on one input.

4. Threshold device in accordance with any of claims 2 and 3, characterized in that the first terminal of the capacitor ($C_3$) is further connected to the potentiometer divider formed by a transistor ($T_3$) the base of which is connected to this first terminal and the emitter of which feeds a resistive attenuator ($R_6$, $R_7$), the output of the attenuator being connected to the second input (—) of the comparator (3).

5. Threshold device in accordance with claim 4, characterized in that the emitter of the transistor ($T_3$) forming the potentiometer divider is connected to a reference threshold voltage ($V_2$) through a diode ($D_1$) polarized in the conducting direction with respect to this reference voltage.